# EUROPEAN PATENT SPECIFICATION

(11) **EP 2 783 495 B1**
(45) Date of publication and mention of the grant of the patent: **13.04.2016**
(21) Application number: 12795769.4
(22) Date of filing: 22.11.2012
(51) Int. Cl.: H04L 29/06, H04L 29/14, H04L 29/08, G06F 13/40, G05B 19/042, G05B 19/05, G05B 19/048

(54) **SAFETY SYSTEM**
SICHERHEITSSYSTEM
SYSTEME DE SECURITE

(30) Priority: 22.11.2011 SE 1151112; 22.11.2011 US 201161562621 P
(43) Date of publication of application: 01.10.2014
(73) Proprietor: HMS Industrial Networks AB, 300 04 Halmstad (SE)
(72) Inventor: PALMHAGER, Jörgen, S-302 40 Halmstad (SE); HÄGGSTRÖM, Johan, S-305 97 Eldsberga (SE); STAMBERG, Daniel, S-302 24 Halmstad (SE)
(74) Representative: Awapatent AB
(86) International application number: PCT/EP2012/073289
(87) International publication number: WO 2013/076173

(56) References cited:
- EP-A2- 1 703 346
- US-A1- 2008 051 913
- US-A1- 2011 098 829

## Description

### Technical field

The present invention generally relates to fieldbus systems. The present invention particularly relates to efficiently increasing the functional safety of devices operating within the system.

### Background of the invention

The need for safe operation of machines is a critical factor in the everyday work in most industries. The term "functional safety" is normally used in situations when the safety of a system depends on the correct functionality of the system or a part of the system, i.e. when the system has to be switched off in a dangerous situation, or when a critical parameter (e.g. temperature or pressure in a chemical process) has to be monitored in order to ensure safety.

Today most industrial plants include network communication between various entities in the plant for real time distributed control. The communication is normally carried out by means of a so-called fieldbus which is standardized in IEC 61158. The fieldbus links controllable entities in the plant, such as motors and switches, valves etc, and data collecting entities, such as sensors, to programmable logic controllers (PLCs) which in turn are connected to a human machine interface (HMI) where an operator can monitor and control the plant. Examples of different fieldbuses are AS-Interface, CANOpen, CompoNet, ControlNet, CC-Link, DeviceNet, EtherCAT, Ethernet Powerlink, EtherNet/IP, Interbus, LonWorks, Modbus, PROFIBUS DP, PROFIBUS PA, PROFINET IO, PROFINET IRT, SERCOS III, SERCOS interface and Foundation_Fieldbus_H1.

Despite the above technologies share the generic name "fieldbus" the differences between them may be substantial such that they are not readily interchangeable and may not be easily connected to each other. To this end, the applicant has developed a generic two-port communication module under the name Anybus™ which facilitates the connection of a device to various different fieldbus types by providing an Anybus™ interface on one of the ports and any fieldbus interface on the other port.

Regardless of the specific communication protocol used in the communication between the units, safe and reliable communication is needed for critical applications. To this end concept of functional safety may be found in many industrial automation applications like robotics, presses etc; any chemical process, where certain parameters have to be monitored in order to prevent explosion, burning, pollution of poisonous gases etc; and also in relation to machinery in open field like lifts, cranes, electrical doors etc. Additionally, the need for functional safety is increasing as e.g. end users are requesting their suppliers to integrate safe communication functions via standard networks into their automation devices. Moreover, the new European Machine Directive (2006/42/EG), which will be set into force by beginning of 2012, forces all machine builders to implement a safety concept into their machines and plants.

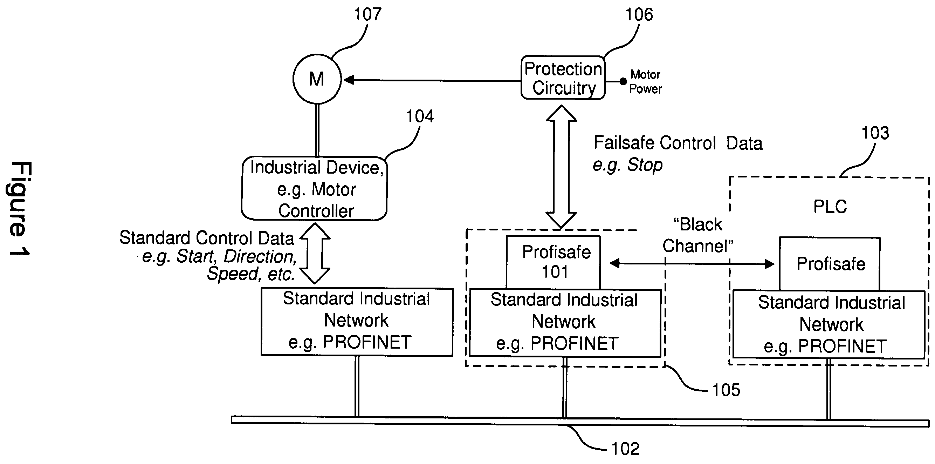

In order to ensure safe communication of fail-safe control data to a machine, such as a "stop" command, a so-called black channel may be used. One example of this concept is illustrated in Fig. 1, where the black channel is implemented by means of the PROFIsafe™ technology (standardized in IEC 61784-3-3) and uses a safety layer between the communication stack and application in order to implement the functional safety. The safety layer performs safety-related transmission functions and checks on the communication to ensure the integrity of the link meets the requirement for SIL 3 continuous high-demand mode. The safety layer is implemented either as a stand-alone module 105 (as shown in Fig. 1) or implemented directly in the motor controller 104 (not shown) making the motor controller "safety aware". PROFIsafe™ is one example of an implementation of functional safety for a device. However, other standards also exist at present for implementing functional safety.

As shown in Fig. 1, the PROFIsafe™ module 101 is connected to the PLC 103 via the network 102 (e.g. PROFINET™). The motor controller 104 is also connected to the PLC 103 by means of the same network 102. The PROFIsafe™ module is connected to protection circuitry 106 (e.g. a relay) which makes it possible to cut off the power to the motor 107 via a failsafe communication link if need be, in order to provide safe operation of the motor 107.

Companies who today lack the concept of functional safety and want to update their controllers to include safety need to invest a substantial amount of money in order to implement the concept; either by providing new "safety-aware" controllers (i.e. upgrading controller 104 in Fig. 1), or by introducing separate PROFIsafe™ modules 105 for providing the functional safety. The latter solution drastically increases the number of network nodes 105 present in the system.

The document EP1703346A2 discloses a safety control block which interfaces to one or more devices utilizing one or more communication protocols, wherein a network interface receives and/or transmits data directly from a network. A backplane interface receives and/or transmits data from a backplane. A backplane extension receives and/or transmits data from a backplane. A processing component receives data from at least one of the network interface, backplane interface and backplane extension and determines if the received data is related to safety or non-safety. A safety I/O circuitry receives safety data from the processing component, wherein the safety data is utilized to communicate to at least one control device.

The document US2011/098829A1 discloses a safety controller having at least one input for the connection of a sensor, at least one output for the connection of an actuator, at least one communication interface for the connection of a further safety controller, to exchange control relevant information, as well as having a control unit. The safety controller is configured to carry out a control program which generates a control signal at the outputs in accordance with predeterminable logic rules in dependence on input signals at the inputs and/or in dependence on the control relevant information. In this respect, the communication interface is configured for the connection of safety controllers in a line arrangement, in which each safety controller has a neighboring safety controller arranged as a predecessor and/or a neighboring safety controller arranged as a successor, and the logic rules process control relevant information of a connected predecessor and/or a connected successor and communicate the so determined control signals as control relevant information to a connected predecessor and/or a connected successor.

The document US2008/051913 discloses a method for process control, wherein at least one process device to be controlled is controlled by at least one process module and at least one safety module in that process signals of the process module not relevant to safety and safety signals of the safety module relating to process safety are logically linked to one another and at least one local safety signal of a local safety sensor is supplied directly to at least one control output of a local control unit associated with the process device while bypassing this logical linking operation in order to effect a fast change in state at the process device to be controlled which is connected to the control output, wherein the fast switching path includes a fast switching function with which the result of the logical linking operation and the local safety signal are evaluated together and wherein a fast change in state at the process device to be controlled effected via the fast changing path is changed again, and is in particular reversed again, when the common evaluation produces a predetermined result. The invention also relates to a system for process control, in particular for the carrying out of the method in accordance with the invention.

### Summary of the invention

In view of the above, an objective of the invention is to provide a communication system assembly for providing functional safety while keeping the complexity of the system at a low level.

In particular, an objective is to provide a communication system assembly for implementing functional safety without the need for complex host systems or the need for increasing the number of network nodes in the communication system. By the present invention it is possible to use a host system which is not network-specific in the sense that it may operate together with any type of fieldbus and any type of safety protocol by using a communication module that has the capability of communicating both with the host system and a safety module connected to the communication module.

According to a first aspect, the present invention is realized by a communication system assembly comprising a communication module and a safety module, wherein the communication module is adapted to be connected to a network and to a host system, wherein the communication module is adapted to receive data from the network and provide a subset of said data as safety data to said safety module and provide a different subset of said data as process data to the host system

An advantage is that the safety module may receive information from the network via the communication module, hence reducing the number of network nodes needed in the system for connecting the safety module to the network. Additionally, the need for complex host systems implementing the desired functional safety is removed.

The communication module and safety module may be connected-via two or more dedicated pins in a connector in the communication module.

An advantage with this embodiment is that the communication module and the safety module may be easily connected and the communication module may detect if a safety module is connected to the communication module.

The safety module may be adapted to be connected to the host system for providing signals to protection circuitry connected to the host system.

An advantage with this embodiment is that the protection circuitry may be connected to the host system via standardized connectors wherein board-to-board connectors and wires in the host system transfers the signals from the safety module to the protection circuitry.

The safety module may be adapted to be connected directly to protection circuitry for controlling the operation of one or more devices connected to the host system.

An advantage with this embodiment is that it is possible to use host systems that are not designed for operation in relation with functional safety.

The safety module may be adapted to be connected to the host system for receiving signals from one or more input devices connected to the host system.

An advantage with this embodiment is that the input device(s) may be connected to the host system via standardized connectors wherein board-to-board connectors and wires in the host system transfers the signals from the protection circuitry to the safety module.

The safety module may be adapted to be connected directly to one or more input devices for receiving signals to controlling the operation of one or more devices connected to the host system.

An advantage with this embodiment is that it is possible to use host systems that are not designed for operation in relation with functional safety.

The communication module may comprise software code portions representing one or more software objects, wherein said objects are adapted to communicate both with the safety module and the host system

An advantage with this embodiment is that the host system may receive safety related data (such as the status of the safety module and the protection circuitry it is monitoring/controlling) from the safety module without the need for accessing the PLC on the network, hence reducing the amount of data needed to be transferred on the network.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig 1 diagrammatically illustrates a prior art industrial communication system implementing functional safety;
Fig. 2 illustrates an overview of an exemplary control system in which the present inventive concept may be implemented.
Fig. 3 illustrates various software modules of a control system in which the present inventive concept may be implemented.

### Detailed description of preferred embodiments

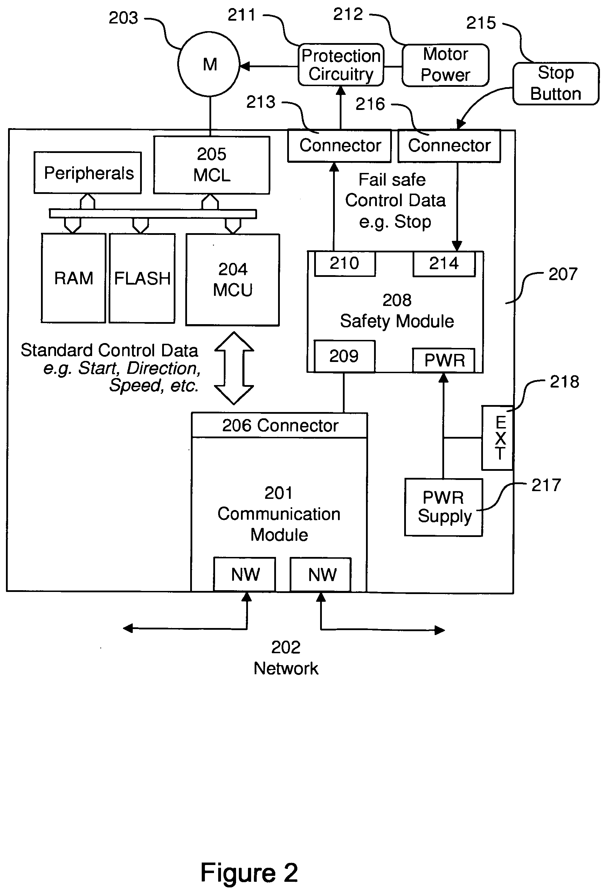

Fig. 2 illustrates an overview of an exemplary control system in which the present inventive concept may be implemented.

An communication module 201 (e.g. an Anybus™ module as described above) is connected to the fieldbus network 202 for receiving control data for controlling e.g. a motor 203 via a Micro Control Unit, MCU, 204 and motor control logic, MCL, 205. The communication module 201 is connected to the MCU 204 by means of a connector 206, such as a 50-pin compact flash connector. As disclosed above, the communication module 201 acts as an interface between the fieldbus network 202 and the MCU 205 arranged in a host microprocessor system 207 and converts control data received from the fieldbus (in a specific fieldbus format depending on the fieldbus used in the system) into a common format before providing the data to the MCU 204 in the host microprocessor system 207. Correspondingly, data received from the MCU 204 is converted by the communication module 201 before being transmitted onto the fieldbus network 202.

A safety module 208 is also arranged in the host microprocessor system 207. The safety module 208 is connected to the communication module 201 by means of an interface 209 in the safety module 208 and the connector 206 in the communication module 201. In a preferred embodiment two dedicated pins are reserved in the connector 206 for communication with the safety module 208. However, it is understood that the safety module 208 and the communication module 201 may be connected by means of more than two pins, by optical connectors or by a radio communication link, such as Bluetooth™, WLAN or the like. The communication module 201 may poll the dedicated pins in order to determine if a safety module 208 is connected to the communication module 201. This information may then be provided to the PLC (103 in Fig. 1) if needed.

The safety module 208 also comprises an output port 210 for connecting the safety module 208 to protection circuitry 211 (e.g. a relay) for disconnecting the motor 203 from its power supply 212 in case of emergency. The connection to the protection circuitry 211 may be implemented by means of a direct connection from the output port 210 to the protection circuitry 211. Alternatively, the output port 210 of the safety module 208 may be connected to the host microprocessor system 207 by means of a board-to-board connector, wherein the signals from the output port 210 are provided to the protection circuitry 211 via wires and a connector 213 in the host microprocessor system 207.

The safety module 208 also comprises an input port 214 for connecting the safety module 208 to an input unit 215, such as a stop button as illustrated in Fig. 2. The connection to the input unit 215 may be implemented by means of a direct connection from the input port 214 to the input unit 215. Alternatively, the input port 214 of the safety module 208 may be connected to the host microprocessor system 207 by means of a board-to-board connector, wherein the signals from the input unit 215 are provided to the input port 214 via wires and a connector 216 in the host microprocessor system 207.

The safety module 208 receives power from a power supply 217 arranged in the host microprocessor system 207. The reliability of the power supply 217 is preferably made high by providing power backup in the form of batteries or capacitors should the ordinary power providing circuitry in the power supply fail. Alternatively or additionally may the safety module 208 receive power from an external source via power connector 218.

Data received from the PLC (103 in Fig. 1) in the communication module 201 may comprise both standard control data and failsafe control data. When received in the communication module the data is split up by the communication unit 201 wherein the standard control data is provided the MCU 204 and the failsafe control data is provided to the safety module as illustrated in Fig. 2. This may be done e.g. by including a data header in messages transmitted to the communication module 201, which indicates the amount of standard control data vs. failsafe control data that is present in the message.

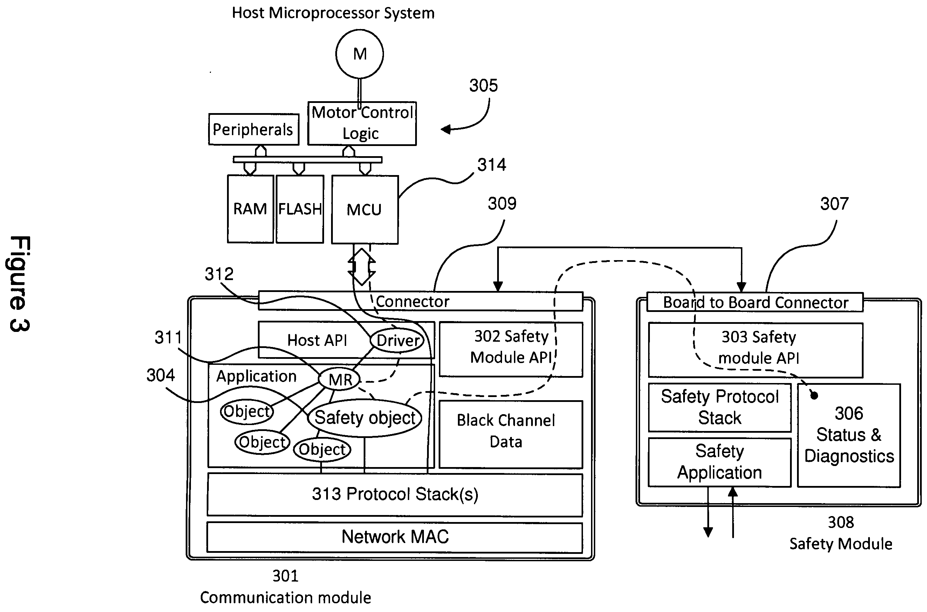

Fig. 3 illustrates various software modules of a control system in which the present inventive concept may be implemented.

As disclosed above, the communication module 301 is connected to the safety module 308, preferably via a number of dedicated pins in a connector in the communication module 301. In the communication module 301 a safety module API 302 communicates with a corresponding safety module API 303 in the safety module 308 for providing service and Black Channel encapsulation.

The communication module application comprises a number of objects and their associated methods. These objects comprises variables and functions according to the well-established object-oriented programming (OOP) paradigm.

The communication module application is supplemented with a safety object 304 with its associated methods which makes it possible to share safety information between the host 305 and the safety module 308.

More specifically, as illustrated by the dashed line in Fig. 3 the host 305 may receive status and diagnostics data 306 from the safety module 308 via the safety module APIs 303, 302, the connectors 307, 309, the safety object 304, the message router (MR) 311 and the driver in the host API 312. This hence makes it provide the host with safety data status via an "unsafe" interface thereby removing the need for the host to access the network in order to obtain safety data. More specifically, referring to the prior art system in Fig. 1, in case the safety module 105 disrupts the power to the motor due to e.g. an emergency stop command the motor controller 104 will not become aware of this situation save accessing the PLC 103 in order to receive the information. By using the safety object according to the present invention the host can obtain this information directly from the communication module 301.

In one embodiment the safety object 304 may simply be structured group of variables that are accessible both by the host 305 and the safety module 308. Alternatively, the safety object may additionally comprise code defining functions that may be invoked by the host 305 and/or the safety module 308.

Process/control data to/from the network from/to the host is handled by the communication module 301 as illustrated by the solid line between the protocol stack 313 in the communication module 301 and the MCU 314 in the host 305.

The present inventive concept has been presented by disclosing a preferred embodiment. Alternatively, the safety module and the communication module could be integral, wherein the common housing for the communication/safety module would include the connectors for connecting the safety module to the protection circuitry.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A communication system assembly comprising a communication module (201) and a safety module (208), wherein the communication module (201) is adapted to be connected to a network (202) and to a host system (207), wherein the communication module (201) is adapted to receive data from the network (202) and provide a subset of said data as safety data to said safety module (208) and provide a different subset of said data as process data to the host system (207), and wherein the communication module (201) comprises software code portions representing one or more software objects, wherein said objects are adapted to communicate both with the safety module (208) and the host system (207), such that data may be transferred from the safety module to the host system.

2. The communication system assembly according to claim 1, wherein the communication module (201) and safety module (208) are connected via two or more dedicated pins in a connector in the communication module (201).

3. The communication system assembly according to any of claims 1 or 2, wherein the safety module (208) is adapted to be connected to the host system (207) for providing signals to protection circuitry (211) connected to the host system (207).

4. The communication system assembly according to any of claims 1 or 2, wherein the safety module (208) is adapted to be connected directly to protection circuitry (211) for controlling the operation of one or more devices connected to the host system (207).

5. The communication system assembly according to any of the preceding claims, wherein the safety module (208) is adapted to be connected to the host system (207) for receiving signals from one or more input devices connected to the host system (207).

6. The communication system assembly according to any of the preceding claims, wherein the safety module (208) is adapted to be connected directly to one or more input devices for receiving signals to control the operation of one or more devices connected to the host system (207).

## Patentansprüche

1. Kommunikationssystemanordnung mit einem Kommunikationsmodul (201) und einem Sicherheitsmodul (208), wobei das Kommunikationsmodul (201) geeignet ist, an ein Netzwerk (202) und ein Host-System (207) angeschlossen zu werden, wobei das Kommunikationsmodul (201) geeignet ist, Daten vom Netzwerk (202) zu empfangen und eine Untermenge der Daten dem Sicherheitsmodul (208) als Sicherheitsdaten bereitzustellen und dem Host-System (207) eine andere Untermenge der Daten als Prozessdaten bereitzustellen und wobei das Kommunikationsmodul (201) Software-Codeteile aufweist, die ein oder mehrere Software-Objekte darstellen, wobei die Objekte geeignet sind, sowohl mit dem Sicherheitsmodul (208) als auch dem Host-System (207) zu kommunizieren, derart dass die Daten vom Sicherheitsmodul auf das Host-System übertragen werden können.

2. Kommunikationssystemanordnung nach Anspruch 1, wobei das Kommunikationsmodul (201) und das Sicherheitsmodul (208) über zwei oder mehr zugeordnete Stifte in einem Verbinder im Kommunikationsmodul (201) verbunden sind.

3. Kommunikationssystemanordnung nach einem der Ansprüche 1 oder 2, wobei das Sicherheitsmodul (208) geeignet ist, an das Host-System (207) angeschlossen zu werden, um Schutzschaltungen (211), die an das Host-System (207) angeschlossen sind, Signale bereitzustellen.

4. Kommunikationssystemanordnung nach einem der Ansprüche 1 oder 2, wobei das Sicherheitsmodul (208) geeignet ist, direkt an Schutzschaltungen (211) angeschlossen zu werden, um den Betrieb von einer oder mehreren Vorrichtungen, die an das Host-System (207) angeschlossen sind, zu steuern.

5. Kommunikationssystemanordnung nach einem der vorhergehenden Ansprüche, wobei das Sicherheitsmodul (208) geeignet ist, an das Host-System (207) angeschlossen zu werden, um Signale von einer oder mehreren Eingabevorrichtungen, die an das Host-System (207) angeschlossen sind, zu empfangen.

6. Kommunikationssystemanordnung nach einem der vorhergehenden Ansprüche, wobei das Sicherheitsmodul (208) geeignet ist, direkt an eine oder mehrere Eingabevorrichtungen angeschlossen zu werden, um den Betrieb von einer oder mehreren Vorrichtungen, die an das Host-System (207) angeschlossen sind, zu steuern.

## Revendications

1. Ensemble de système de communication comprenant un module de communication (201) et un module de sécurité (208), dans lequel le module de communication (201) est apte à être relié à un réseau (202) et à un système hôte (207), dans lequel le module de communication (201) est apte à recevoir des données du réseau (202) et à fournir un sous-ensemble desdites données en tant que données de sécurité au dit module de sécurité (208) et à fournir un sous-ensemble différent desdites données en tant que données de traitement au système hôte (207), et dans lequel le module de communication (201) comprend des portions de code logiciel représentant un ou plusieurs objets logiciels, dans lequel lesdits objets sont aptes à communiquer avec le module de sécurité (208) et le système hôte (207), de sorte que des données puissent être transférées du module de sécurité au système hôte.

2. Ensemble de système de communication selon la revendication 1, dans lequel le module de communication (201) et le module de sécurité (208) sont reliés par l'intermédiaire de deux broches dédiées ou plus dans un connecteur dans le module de communication (201).

3. Ensemble de système de communication selon la revendication 1 ou 2, dans lequel le module de sécurité (208) est apte à être relié au système hôte (207) pour fournir des signaux à une circuiterie de protection (211) reliée au système hôte (207).

4. Ensemble de système de communication selon la revendication 1 ou 2, dans lequel le module de sécurité (208) est apte à être relié directement à une circuiterie de protection (211) pour commander le fonctionnement d'un ou plusieurs dispositifs reliés au système hôte (207).

5. Ensemble de système de communication selon l'une quelconque des revendications précédentes, dans lequel le module de sécurité (208) est apte à être relié au système hôte (207) pour recevoir des signaux d'un ou plusieurs dispositifs d'entrée reliés au système hôte (207).

6. Ensemble de système de communication selon l'une quelconque des revendications précédentes, dans lequel le module de sécurité (208) est apte à être relié directement à un ou plusieurs dispositifs d'entrée pour recevoir des signaux pour commander le fonctionnement d'un ou plusieurs dispositifs reliés au système hôte (207).
